# DEMANDE DE BREVET EUROPEEN

(11) **EP 0 918 156 A1**
(43) Date de publication de la demande: **26.05.1999**
(21) Numéro de dépôt: 98402883.7
(22) Date de dépôt: 20.11.1998
(51) Int. Cl.: F02M 55/00, F16L 37/00

(54) **Raccord encliquetable notamment pour conduites de carburant**

(30) Priorité: 21.11.1997 FR 9714618
(71) Demandeur: RENAULT, 92109 Boulogne-Billancourt (FR)
(72) Inventeur: Guilbot, Michel, 27370 La Saussaye (FR)
(74) Mandataire: Fernandez, Francis Lionel

(57) **Abrégé**

Raccord encliquetable pour conduite comportant une embase (10), au moins un embout de raccordement (6), un ajutage (4) pouvant être enfiché dans un perçage de branchement correspondant d'un boîtier en réalisant une liaison étanche avec ce perçage par un joint (5) porté par l'ajutage, au moins un bras de fixation (2) déformable élastiquement destiné à venir enserrer le boîtier 1 et au moins un bras de manoeuvre (8) permettant d'écarter ledit bras de fixation (2), caractérisé en ce que ledit bras de manoeuvre (8) est ancré directement sur le bras de fixation (2) et s'étend en saillie sensiblement perpendiculairement à ce dernier.

## Description

La présente invention a pour objet un raccord encliquetable pour conduites et notamment pour conduites de carburant d'un moteur à combustion interne. La présente invention concerne plus particulièrement les raccords encliquetables, du type de ceux utilisés pour le raccordement d'un boîtier, tel qu'un injecteur ou un porte-injecteur de carburant, à un circuit de fluide, tel qu'un circuit de retour du carburant ; de tels raccords comportant d'une part, un ajutage qui s'enfiche dans un perçage de branchement correspondant ménagé dans le boîtier en réalisant une liaison étanche par un joint porté par l'ajutage et d'autre part, des moyens élastiquement déformables de blocage axial de l'ajutage dans le perçage de branchement.

On connaît déjà de tels raccords selon le document DE-2.061.207 ; dans celui-ci l'ajutage, qui est engagé dans le perçage de branchement, est soumis à l'action d'un ressort de compression dans le perçage, ce qui met l'ajutage en appui vers l'extérieur contre une bague élastique, par l'intermédiaire de son collet et y reste maintenu en position fixe.

On connaît également de tels raccords selon le document FR-A-2721088. Selon cet art antérieur, les moyens de blocage axial se composent d'au moins un bras de fixation déformable élastiquement, partant latéralement de l'ajutage, et s'étendant dans un plan dans la direction longitudinale par rapport à l'axe de l'ajutage ou parallèlement à celui-ci, pour venir en prise par l'arrière du boîtier recevant le perçage de branchement lorsque l'ajutage atteint sa position définitive d'enfichable.

Le raccord de conduite selon cet art antérieur, porte de manière imperdable au moins un bras de fixation élastiquement déformable venant en appui contre un épaulement d'encliquetage facile à réaliser, notamment en matière plastique.

Ce raccord peut également comporter, pour permettre le désengagement du raccord de sa position de blocage, deux bras de manoeuvre qui dépassent dans la direction longitudinale, opposée de chaque bras de fixation par rapport au raccord de conduites. Les bras de fixation et les bras de manoeuvre sont reliés de façon à former un point de liaison articulé élastique avec le raccord, pour que les bras de fixation puissent être dégagés de leur position d'accrochage lorsqu'on actionne les bras de manoeuvre.

Selon l'art antérieur connu et décrit ci-dessus, la mise ne place de tels raccords encliquetable s'opère simplement en forçant dans la direction axiale de l'ajutage, le raccord contre le corps de l'injecteur ou du porte-injecteur sur lequel est monté le raccord. Cette poussée axiale assure seule, l'écartement des bras de fixation, écartement qui peut être facilité par l'utilisation de rampes d'introduction disposées à l'extrémité des bras de fixation.

L'opérateur qui monte donc le raccord en procédant de la sorte a du mal à contrôler l'engagement de l'ajutage dans le perçage de branchement de l'injecteur ou du porte-injecteur. En effet, l'effort de poussée qu'il faut exercer sur le raccord, conduit naturellement une pénétration brutale de l'ajutage dans le perçage de branchement correspondant. Or un tel montage brutal peut conduire à une détérioration du joint d'étanchéité entourant l'ajutage, notamment en cas de défaut d'alignement.

Par ailleurs, les bras de manoeuvre décrits dans le document FR-A-2.721.088 s'avèrent difficilement utilisables compte tenu de la rigidité du matériau utilisé pour réaliser le raccord et de la forme de ce dernier notamment lorsqu'il constitue une pièce de raccordement en forme de T comprenant de part et d'autre de l'embase deux embouts de raccordement destinés à être respectivement connectés à une conduite amont et une conduite aval.

La présente invention a donc pour objet un nouveau raccord remédiant aux inconvénients de l'art antérieur.

Le raccord encliquetable pour conduite selon l'invention est du type comportant une embase, au moins un embout de raccordement, un ajutage pouvant être enfiché dans un perçage de branchement correspondant d'un boîtier en réalisant une liaison étanche avec ce perçage par un joint porté par l'ajutage, au moins un bras de fixation déformable élastiquement destiné à venir enserrer le boîtier et au moins un bras de manoeuvre permettant d'écarter ledit bras de fixation.

Selon l'invention, le raccord encliquetable est caractérisé en ce que le bras de manoeuvre est ancré directement sur le bras de fixation et s'étend en saillie sensiblement perpendiculairement à ce dernier.

Selon une autre caractéristique du raccord encliquetable objet de l'invention, l'embase comporte une surface d'appui s'étendant parallèlement au bras de manoeuvre.

Selon une autre caractéristique du raccord encliquetable objet de l'invention, le raccord est réalisé en matière plastique, le bras de fixation et le bras de manoeuvre étant directement formés dans la masse.

Selon une autre caractéristique du raccord encliquetable objet de l'invention, le raccord forme une partie de conduite en T, en présentant deux embouts de raccordement s'étendant perpendiculairement à l'ajutage.

On comprendra mieux les buts, aspects et avantages de la présente invention, d'après la description donnée ci-après d'un mode de réalisation de l'invention, donné à titre d'exemple non limitatif, en se référant au dessin annexé, dans lequel :

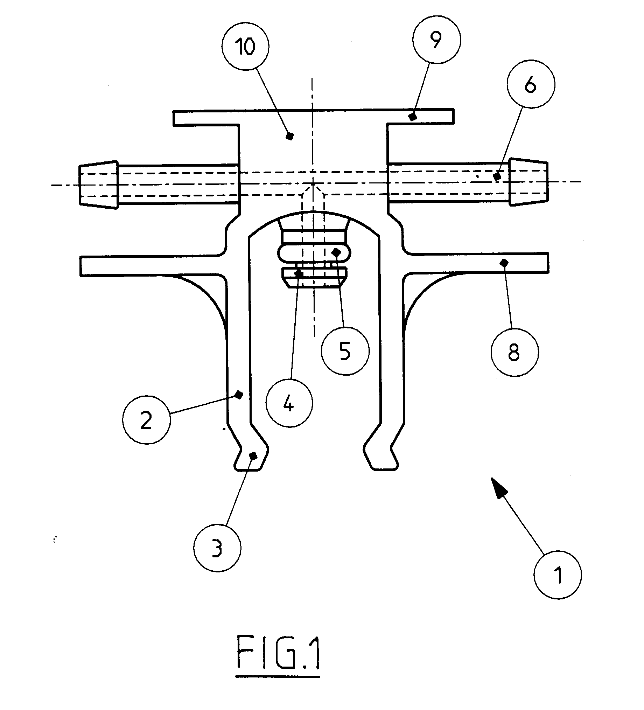

la figure 1 montre un dispositif de raccordement de conduites de carburant selon l'invention.

Conformément à la figure 1, on a représenté en coupe un raccord référencé 1 pour conduite de carburant. Un tel raccord 1 est par exemple utilisé pour assurer le retour du carburant envoyé en excès à un injecteur électromagnétique de type haute pression. Dans les moteurs utilisant de tels injecteurs, le carburant provenant de la pompe d'injection est envoyé par l'intermédiaire de tuyaux haute pression ou par un rail commun aux différents injecteurs qui assurent alors la pulvérisation et la répartition du combustible dans les chambres de combustion.

L'excédent de carburant envoyé à chacun des injecteurs est récupéré et renvoyé au réservoir de carburant. Pour ce faire, on utilise une rampe dite de retour carburant à laquelle est connecté chaque injecteur par l'intermédiaire du raccord 1. Selon ce mode de réalisation, la rampe de retour carburant comporte une pluralité de conduites de carburant reliant les injecteurs entre eux.

L'embout 1 réalisé de façon monobloc en matière plastique, se compose d'un ajutage 4 destiné à pénétrer dans un évidement cylindrique correspondant (encore appelé perçage de branchement) agencé dans le corps de l'injecteur ou du porte-injecteur, où débouche le circuit de fuite du carburant de l'injecteur. L'ajutage 4 est muni d'une rainure périphérique annulaire recevant un joint torique 5 destiné à étancher le jeu radial entre l'ajutage 4 et l'évidement et assurer l'étanchéité du montage.

L'ajutage 4 fait corps avec une embase 10 d'où partent des deux côtés et sensiblement perpendiculairement à l'ajutage 4, deux embouts de raccordement 6 destinés à être connectés à des conduites de carburant, elles même connectées à leurs autres extrémités aux raccords des injecteurs adjacents. Bien évidemment, les raccords destinés aux injecteurs extrêmes présentent des embouts de raccordement de forme et de nombre différents.

Les deux embouts 6 sont traversés par une canalisation dans laquelle débouche le canal intérieur de l'ajutage 4. Ainsi lorsque l'ajutage 4 se trouve engagé dans le perçage de branchement correspondant de l'injecteur ou du porte-injecteur, le carburant traversant l'ajutage 4 débouche dans la canalisation et est entraîné avec le carburant en provenance des autres injecteurs vers le réservoir.

Pour assurer le maintien de l'ajutage 4 dans le perçage de branchement correspondant de l'injecteur ou du porte-injecteur, l'embase 10 porte une agrafe clipsable. Cette agrafe est formée de deux bras de fixation 2 élastiquement déformables, s'étendant en saillie de l'embase 10, de part et d'autre de l'ajutage 4. Ces bras 2 sont destinés à venir enserrer élastiquement le corps de l'injecteur ou du porte-injecteur au droit du perçage de branchement.

Lorsque la forme du corps de l'injecteur ou du porte-injecteur au droit du perçage de branchement, est cylindrique, les deux bras 2 sont donc sensiblement en arc de cercle et lorsque cette forme est sensiblement parallélipipédique ou présente des plats parallèlement s'étendant de part et d'autre du corps l'injecteur ou du porte-injecteur, les deux bras sont alors sensiblement droits et présentent des extrémités 3 recourbées vers l'intérieur destinées à venir emprisonner le corps de l'injecteur ou du porte-injecteur par l'arrière.

Pour venir écarter les bras de fixation 2 et permettre le montage ou le démontage du raccord, le raccord 1 est équipé de deux bras de manoeuvre 8. Ces deux bras de manoeuvre 8 sont disposés respectivement en saillie sur chacun des bras de fixation 2 sensiblement perpendiculairement à ces derniers et sont dirigés vers l'extérieur. Ces bras de manoeuvre ont une rigidité appropriée éventuellement renforcée par des nervures pour entraîner en déplacement les bras de fixation 2.

L'embase 10 comporte par ailleurs des surfaces d'appui 9 rigides s'étendant en saillie parallèlement aux bras de manoeuvre 8. Ces surfaces sont destinées à servir de point d'appui pour agir sur les bras de manoeuvre et écarter les bras de fixation 2.

La mise en place (ou le désengagement) d'un tel raccord par un opérateur est alors le suivant, il écarte les bras de fixation 2 en rapprochant les bras de manoeuvre 8 des surfaces d'appui 9 correspondantes. Compte tenu de la relativement forte rigidité des bras de fixation, il utilise pour ce faire ses deux mains, en pressant entre ses pouces et indexes, les deux bras de manoeuvre 8 vers les surfaces d'appui 9 correspondantes.

Conformément au raccord selon la présente invention, il est possible d'utiliser des bras de fixation de très grande rigidité et donc d'améliorer donc la qualité du montage, la présence des bras de manoeuvre 8, directement sur les bras de fixation 2, permettant alors de vaincre la résistance à l'écartement des bras 2 et d'autoriser la mise en place et le désengagement du raccord sur l'injecteur ou le porte-injecteur.

Par ailleurs, l'engagement de l'ajutage dans le perçage de branchement correspondant de l'injecteur ou du porte-injecteur, en maintenant écarter les deux bras de fixation, permet de contrôler précisément le déplacement relatif des deux pièces, l'effort de pénétration de l'ajutage est alors faible facilitant l'alignement de l'embout et de son joint avec le perçage de branchement, ce qui supprime donc toute détérioration du joint d'étanchéité lors de cette opération.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi en variante de réalisation, on peut supprimer les surfaces d'appui spécifiques 9 et utiliser à leur place les embouts de raccordement 6 pour prendre appui.

Ainsi, les bras de manoeuvre 8 peuvent être ancrés sur toute la longueur des bras de fixation 2 depuis pratiquement leurs bases jusqu'à leurs extrémités 3. De préférence toutefois, on choisira d'éloigner les bras de manoeuvre 8 de la base des bras de fixation 2, tout en conservant une distance appropriée avec les surfaces d'appui 9 pour faciliter le travail des opérateurs.

Ainsi ce raccord peut être utilisé pour toute autre application que le circuit d'alimentation en carburant des moteurs à combustion interne.

## Revendications

1. Raccord encliquetable pour conduite comportant une embase (10), au moins un embout de raccordement (6), un ajutage (4) pouvant être enfiché dans un perçage de branchement correspondant d'un boîtier en réalisant une liaison étanche avec ce perçage par un joint (5) porté par l'ajutage, au moins un bras de fixation (2) déformable élastiquement destiné à venir enserrer le boîtier 1 et au moins un bras de manoeuvre (8) permettant d'écarter ledit bras de fixation (2), caractérisé en ce que ledit bras de manoeuvre (8) est ancré directement sur le bras de fixation (2) et s'étend en saillie sensiblement perpendiculairement à ce dernier.

2. Raccord encliquetable pour conduite selon la revendication 1, caractérisé en ce que l'embase (10) comporte une surface d'appui (9) s'étendant parallèlement au bras de manoeuvre (8).

3. Raccord encliquetable pour conduite selon l'une quelconque des revendications 1 à 2, caractérisé en ce que le raccord (1) est réalisé en matière plastique et en ce que le bras de fixation (2) et le bras de manoeuvre (8) sont directement formés dans la masse.

4. Raccord encliquetable pour conduite selon l'une quelconque des revendications 1 à 3, caractérisé en ce que le raccord (1) forme une partie de conduite en T.
